# EUROPEAN PATENT APPLICATION

(11) **EP 4 807 607 A1**
(43) Date of publication of application: **16.09.2026**
(21) Application number: 26159180.4
(22) Date of filing: 17.02.2026
(51) Int. Cl.: G06F 21/62, G06F 16/182, G06F 40/166, H04L 9/40, G06V 30/413, G06V 30/40, G06V 30/10, G06T 11/60

(54) **FILE PROCESSING METHOD AND FILE PROCESSING DEVICE FOR MASKING OF SENSITIVE INFORMATION IN DOCUMENTS**

(30) Priority: 11.03.2025 JP 2025038685
(71) Applicant: Toshiba TEC Kabushiki Kaisha, Tokyo 141-8562 (JP)
(72) Inventor: Endo, Koji, Tokyo, 141-8562 (JP)
(74) Representative: Bandpay & Greuter

(57) **Abstract**

According to one embodiment, an automated file processing method includes receiving an electronic document file and a request to process the electronic document file to redact sensitive information in the electronic document file. Text recognition processing is performed on the electronic document file. A masking process is executed to visibly obscure a portion of the electronic document file corresponding to text recognized in the text recognition processing. A text concealment process is executed to delete or replace text in the visibly obscured portion of the electronic document file to prevent electronic recovery or reproduction of original text in the visibly obscured portion. Then, a processed document file is generated from the electronic document file on which the masking process and the text concealment process have been executed.

## Description

### FIELD

Embodiments described herein relate generally to a file processing method and a file processing device for masking of sensitive information in documents.

### BACKGROUND

Various companies provide, via a network, a service involving accepting a file from an image forming device, a smartphone, a personal computer or the like, then executing a requested file processing on the file to generate a processed file.

In such a service, the file processing may be character or text recognition in which text or the like in a document file is recognized/read. In some cases, the recognition processing may also involve concealment processing in which the deciphering/recognition of certain text/characters in the document file is disabled or prevented. The processing may also involve saving and transferring the document to a specified destination, or the like.

In some cases, concealment processing (e.g., redacting or masking) is a necessary function to meet a user's requirements for generating a document file in which confidential information, such as personal information, is concealed prior to storage or transfer.

Typically, the concealment processing involves a so-called "blacking out" of a designated area in a document file to make the text characters in the area unreadable. The concealment processing is conventionally performed by adding a blacked out geometric shape, such as a blacked out rectangle, to a region in a document file to cover/conceal characters to be hidden therein.

In the document file after the concealment processing is performed, the characters in the blacked-out area are masked/covered and therefore the information in the document area cannot be read.

However, in some cases, if character information is embedded as a character code in a document file, there is a risk that the character information may still be acquired by a copy and paste function or the like. This may lead to a leakage of document information that was intended to be concealed.

### DISCLOSURE OF INVENTION

There is provided an automated file processing method, comprising: receiving an electronic document file and a request to process the electronic document file to redact sensitive information in the electronic document file; performing text recognition processing on the electronic document file; executing a masking process to visibly obscure a portion of the electronic document file corresponding to text recognized in the text recognition processing; executing a text concealment process to delete or replace text in the visibly obscured portion of the electronic document file to prevent electronic recovery or reproduction of original text in the visibly obscured portion; and generating a processed document file from the electronic document file on which the masking process and the text concealment process have been executed.

In some embodiments, the text recognition processing is optical character recognition (OCR) processing.

In some embodiments, the text outside the visibly obscured portion in the processed document file is recognized text provided by the OCR processing.

In some embodiments, the text outside the visibly obscured portion in the processed document file is recognized text provided by the text recognition processing.

In some embodiments, the text concealment process replaces the text in the visibly obscured portion with a dummy character.

In some embodiments, the text concealment process is deleting the text in the visibly obscured portion.

In some embodiments, the portion is visibly obscured by placement of a black box over the portion.

There is also provided an automated file processing device, comprising: a communication interface connected to a network; and a processor configured to: receive, via the communication interface from an external electronic device, an electronic document file and a request to process the electronic document file to redact sensitive information in the electronic document file; perform text recognition processing on the electronic document file; execute a masking process to visibly obscure a portion of the electronic document file corresponding to text recognized in the text recognition processing; execute a text concealment process to delete or replace text in the visibly obscured portion of the electronic document file to prevent electronic recovery or reproduction of original text in the visibly obscured portion; and generate a processed document file from the electronic document file on which the masking process and the text concealment process have been executed.

In some embodiments of the device, the text recognition processing is optical character recognition (OCR) processing.

In some embodiments of the device, the text outside the visibly obscured portion in the processed document file is recognized text provided by the OCR processing.

In some embodiments of the device, the text outside the visibly obscured portion in the processed document file is recognized text provided by the text recognition processing.

In some embodiments of the device, the text concealment process replaces the text in the visibly obscured portion with a dummy character.

In some embodiments of the device, the text concealment process is deleting the text in the visibly obscured portion.

In some embodiments of the device, the portion is visibly obscured by placement of a black box over the portion.

In some embodiments of the device, the processor is further configured to: output the processed document file to a cloud-storage service via the communication interface.

There is further provided a non-transitory, computer-readable medium storing program instructions which when executed by a processor of an automated file processing device causes the device to perform a method comprising: receiving an electronic document file and a request to process the electronic document file to redact sensitive information in the electronic document file; performing text recognition processing on the electronic document file; executing a masking process to visibly obscure a portion of the electronic document file corresponding to text recognized in the text recognition processing; executing a text concealment process to delete or replace text in the visibly obscured portion of the electronic document file to prevent electronic recovery or reproduction of original text in the visibly obscured portion; and generating a processed document file from the electronic document file on which the masking process and the text concealment process have been executed.

In some embodiments of the non-transitory, computer-readable medium, the text recognition processing is optical character recognition (OCR) processing.

In some embodiments of the non-transitory, computer-readable medium, the text outside the visibly obscured portion in the processed document file is recognized text provided by the text recognition processing.

In some embodiments of the non-transitory, computer-readable medium, the text concealment process replaces the text in the visibly obscured portion with a dummy character.

In some embodiments of the non-transitory, computer-readable medium, the text concealment process is deleting the text in the visibly obscured portion.

### BRIEF DESCRIPTION OF THE DRAWINGS

FIG. 1 schematically shows a network system including a network server having a file processing device according to an embodiment.
FIG. 2 is a functional block diagram of a file processing device.
FIG. 3 is a hardware block diagram showing of a file processing device.
FIG. 4 is a flowchart of an operation example of a file processing device.
FIG. 5 shows an example of a GUI screen displayed on an edge device in the operation example.
FIG. 6 schematically shows character recognition processing, mask processing, and character concealment processing in an operation example.

### DETAILED DESCRIPTION

An embodiment described herein is to provide a file processing technique including concealment processing to prevent the leakage of information intended to be concealed.

In general, according to one embodiment, an automated file processing method includes: receiving an electronic document file and a request to process the electronic document file to redact sensitive information in the electronic document file; performing text recognition processing on the electronic document file; executing a masking process to visibly obscure a portion of the electronic document file corresponding to text recognized in the text recognition processing; executing a text concealment process to delete or replace text in the visibly obscured portion of the electronic document file to prevent electronic recovery or reproduction of original text in the visibly obscured portion; and generating a processed document file from the electronic document file on which the masking process and the text concealment process have been executed.

### Network Server

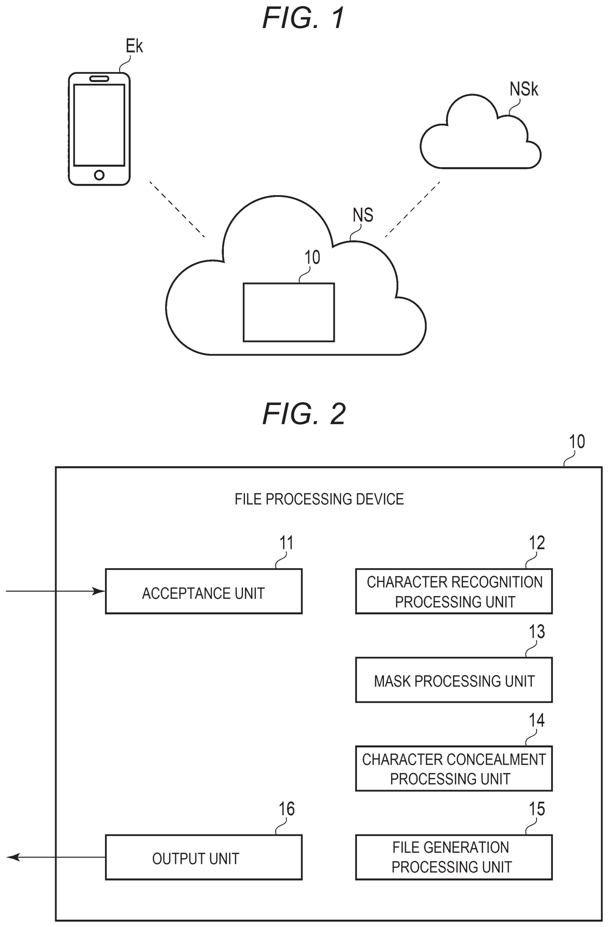

First, a network server NS incorporating a file processing device 10 according to an embodiment will be described with reference to FIG. 1. FIG. 1 schematically shows a network system including the network server NS incorporating the file processing device 10.

The network system includes various edge devices Ek and various other network servers NSk or the like in addition to the network server NS having the file processing device 10. The network server NS can mutually communicate with the edge devices Ek and the network servers NSk via a network.

For example, the edge device Ek is a smartphone, a personal computer, an image forming device, or the like. The network server NS and the network servers NSk, can provide various file processing services via a network. For example, these servers may be cloud servers that provide a file processing service across the internet.

For example, the network server NS receives a file and a file processing instruction from the edge device Ek via a network and executes file processing on the file accordingly. The file processing can include saving (storage), character (text) recognition processing, mask processing, file transfer, and the like.

For example, the network server NS receives a document file from the edge device Ek, performs character recognition on the document file, and generates and saves a processed document file. The network server NS may also perform mask processing on the document file and generates and saves a processed document file with masking. The network server NS may also transfer the document file or the processed document file to another network server NSk and instructs the network server NSk to perform additional or other file processing. In general, the network server NS may be capable of performing a wide variety of file processing types.

In the present example, a document file is assumed to be a file including at least some character information. In this example, character information refers to information that is recognizable or understandable as text characters or the like. Character information in this context includes visible/printed text and underlying character code information associated therewith in a document.

### Functional Configuration of File Processing Device

The functional configuration of the file processing device 10 will now be described with reference to FIG. 2. FIG. 2 is a block diagram showing an example of the functional configuration of the file processing device 10.

The file processing device 10 includes an acceptance unit 11, a character recognition processing unit 12, a mask processing unit 13, a character concealment processing unit 14, a file generation processing unit 15, and an output unit 16.

The file processing device 10 controls the acceptance unit 11, the character recognition processing unit 12, the mask processing unit 13, the character concealment processing unit 14, the file generation processing unit 15, and the output unit 16, to execute necessary file processing.

The acceptance unit 11 accepts various requests from an edge device Ek and/or a network server NSk. In this context, a request generally includes a file, a designation of file processing to be performed on the file, processing parameter/settings, and the like. A request may also be referred to as a job, a task or the like.

For example, a request includes a document file, a designation that character recognition processing and concealment processing is to be performed on the document file followed by a transfer of the processed document file to a subsequent destination, and the like.

The character recognition processing unit 12 executes character recognition on the document file and provides a recognition result. For example, the character recognition processing unit 12 executes character recognition using OCR (optical character recognition) technology.

For example, the character recognition processing unit 12 generates a transparent character layer incorporating the recognition result characters superimposed over the characters in the document file before the recognition processing.

In this way, the character recognition processing unit 12 recognizes the characters included in the document file, superimposes a transparent character layer with the recognized characters on the original document file, and thus provides the recognized characters for the document file.

The mask processing unit 13 executes mask processing that places a concealment area in the document file to obscure the underlying text or document information.

For example, the mask processing unit 13 provides a GUI (graphical user interface) from which a user can accept the placement/positioning of a concealment area in the document file. For example, the GUI displays one page of the document file and receives a user's acceptance the concealment area placed on the displayed page. In other examples, a plurality of pages may be displayed at the same time or the displayed page may be representative of multiple pages in the document. The concealment area may be in multiple portions and/or a plurality of areas may be covered.

In one example, the concealment area may be set as a rectangular area sized and positioned by dragging the cursor on the GUI screen. If the document file includes character information of a character code, the concealment area may be set on a per character basis or on a per character string basis by clicking the cursor.

The mask processing unit 13 receives information about the concealment area that has been set for the document file via the GUI, generates a mask that matches the set concealment area, and arranges the mask in the document file such that the mask overlaps the concealment area as set. The mask is typically a blacked-out rectangular shape, but may be any shape, color, pattern, or the like that serves to make the concealment area unreadable. For example, the masking may result from a blurring, a smearing, or a pixelated filtering.

In this way, the mask processing unit 13 superimposes the mask over the concealment area on each page of the document file as required, and thus obscures the concealment area on each page of the document file to make it unreadable.

The character concealment processing unit 14 executes character concealment processing that makes embedded character information or the like in the concealment area unretrievable or illegible. For example, when the document file from the beginning includes embedded character information or the like, such may be recoverable even after the visible text is obscured by the masking. Similarly, the recognized character overlay inserted into the document file by the character recognition processing unit 12 may be present and recoverable even after the masking.

In the present example, the character concealment processing unit 14 acquires information for each page of the document file, information about each character included on each page, and information about each concealment area set on a page. The character concealment processing unit 14 extracts the character information included in each concealment area, and replaces the character codes of the extracted characters with the character code of an obscuring character. The obscuring character may also be referred to as a masking character, a dummy character or the like. For example, the obscuring character includes "*", a black square, "X", or the like. Alternatively, the character concealment processing unit 14 may just delete the character codes of the extracted character leaving the character information for the corresponding position blank/absent.

The information of each page, each character, and each concealment area includes information about the position and size thereof on a plane of the page. Each character and each concealment area on each page can be designated, based on information of the relative position and size thereof in relation to each page. For example, each character and each concealment area are designated as a rectangle region. The position of each character and each concealment area is designated by the coordinates of one vertex of the corresponding rectangle region. The size of each character and each concealment area can be designated by the coordinates of a vertex located diagonally opposite from the positioning vertex (diagonally opposite vertex). The character included in each concealment area is extracted by intra-area character extraction processing based on the information of the position and size of each page, each character, and each concealment area on a planar coordinate system.

In this way, the character concealment processing unit 14 extracts a character included in each concealment area, replaces or deletes the character code of the extracted character, and thus makes the character included in the concealment area illegible.

The file generation processing unit 15 collaborates with the character recognition processing unit 12, the mask processing unit 13, and the character concealment processing unit 14, and thus generates a processed document file.

For example, the file generation processing unit 15 collaborates with the character recognition processing unit 12 and thus generates a character-recognition-processed document file on which the character recognition processing has been done. The file generation processing unit 15 collaborates with the mask processing unit 13 and thus generates a mask-processed document file on which the mask processing has been done. The file generation processing unit 15 collaborates with the character concealment processing unit 14 and thus generates a character-concealment-processed document file on which the character concealment processing has been done.

In the description below, for the sake of convenience, a character-recognition-processed document file may be referred to as a character-recognized document file, the mask-processed document file may be referred to as a masked document file, and the character-concealment-processed document file may be referred to as an obscured document file.

The output unit 16 outputs the document file generated by the file generation processing unit 15. The output by the output unit 16 includes saving, transmission, and the like functions for the document file. For example, the output unit 16 accepts a designation of a name, a save destination, and the like for the document file, and saves the document file according to the designations. The output unit 16 also accepts an instruction to transmit the document file and transmits the document file to an edge device Ek and/or another network server NSk.

### Hardware Configuration of File Processing Device

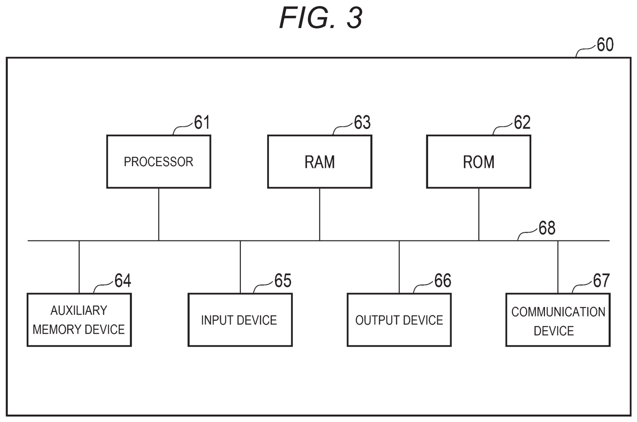

The file processing device 10 is a computer specialized via incorporation of specific, specialized software and the like. A hardware configuration of a computer 60 forming the file processing device 10 will now be described with reference to FIG. 3. FIG. 3 is a block diagram showing an example of the hardware configuration of the file processing device 10.

The computer 60 includes a processor 61, a ROM (read-only memory) 62, a RAM (random-access memory) 63, an auxiliary memory device 64, an input device 65, an output device 66, and a communication device 67.

The processor 61, the ROM 62, the RAM 63, the auxiliary memory device 64, the input device 65, the output device 66, and the communication device 67 are electrically coupled to each other via a bus 68 and can transmit and receive data and information via the bus 68.

The processor 61 is, for example, a hardware processor including a CPU (central processing unit), a GPU (graphical processing unit) or the like. The processor 61 controls the ROM 62, the RAM 63, the auxiliary memory device 64, the input device 65, the output device 66, and the communication device 67.

The ROM 62 is a non-volatile memory. The ROM 62 stores, in a non-transitory manner, a startup program that is necessary for the startup of the processor 61. The processor 61 executes the program in the ROM 62 and thus starts up. The ROM 62 is, for example, an EPROM (erasable programmable read-only memory) and stores various settings at the startup in addition to the startup program.

The RAM 63 is a volatile memory. The RAM 63 stores, in a transitory manner, a software program for configuring the processing of the processor 61 and necessary data for the execution of the program. The processor 61 executes the program in the RAM 63 and thus computes the data in the RAM 63 and causes the RAM 63 to store the result of the computation.

The auxiliary memory device 64 is a non-volatile memory such as an HDD (hard disk drive) or an SSD (solid-state drive). The auxiliary memory device 64 stores, in a non-transitory manner, a program to be executed by the processor 61 and necessary data for the execution of the program. The processor 61 reads the stored program and data from the auxiliary memory device 64 into the RAM 63, executes the program, and thus executes various described functions.

The input device 65 is, for example, a keyboard, a mouse, a touch panel, or the like. The input device 65 is not limited these examples and may be any other input device. The output device 66 is, for example, a display. The output device 66 is not limited to a display and may be any other output device. The input device 65 and the output device 66 may be combined as an input-output device having the functions of both devices. For example, the input-output device may include a tablet device, a disk drive, or the like.

The communication device 67 has the functions of transmitting and receiving data and information to and from the edge device Ek and the network server NSk. For example, the communication device 67 includes a receiving device and transmitting device.

The program stored in a non-transitory manner in the auxiliary memory device 64 is provided to the computer for execution, for example, via a computer-readable recording medium in which the program has been recorded in a non-transitory manner. Such a recording medium is referred to as a non-transitory computer-readable recording medium. For example, the non-transitory computer-readable recording medium is a disk such as a flexible disk, an optical disk (CD- ROM, CD-R, DVD-ROM, DVD-R or the like) or a magneto-optical disk (MO or the like), or a semiconductor memory or the like.

The program stored in a non-transitory manner in the auxiliary memory device 64 is read into the auxiliary memory device 64 and stored therein in a non-transitory manner, via the input device 65, for example, via a disk drive if the recording medium is a disk. The program may also be stored in a server on a network, downloaded from the server, and stored in a non-transitory manner in the auxiliary memory device 64.

At the startup, the processor 61 executes the program in the ROM 62, reads an operating system (OS) or the like into the RAM 63, and thus starts up. The processor 61 monitors an input of an instruction, connection of an external device, and the like under the control of the OS. The processor 61 sets a program area and a data area in the RAM 63 under the control of the OS.

In response to an input of an instruction to start up the file processing device 10, the processor 61 reads a file processing program from the auxiliary memory device 64 into the program area in the RAM 63, and reads necessary data for the execution of the file processing program from the auxiliary memory device 64 into the data area in the RAM 63. The processor 61 executes the file processing program, computes the data in the data area in accordance with the file processing program, and writes the result of the computation into the data area. With such operations, the processor 61 executes at least a part of the functions of the file processing device 10.

That is, the processor 61 executes a specialized file processing program and thus executes at least a part of the described functions of the file processing device 10. For example, the processor 61 collaborates with the RAM 63, the auxiliary memory device 64, the input device 65, the output device 66, and the communication device 67, and thus executes the described functions of the acceptance unit 11, the character recognition processing unit 12, the mask processing unit 13, the character concealment processing unit 14, the file generation processing unit 15, and the output unit 16.

### Operation Example of File Processing Device

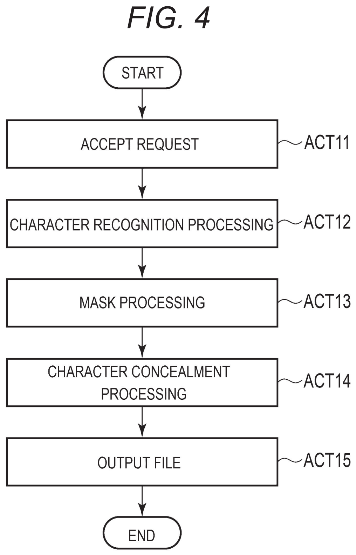

An operation example of file processing device 10 will now be described with reference to FIGs. 4 to 6. FIG. 4 is a flowchart showing the flow of the operation example of the file processing device 10. The operation example is an example in which, in response to a request from the edge device Ek, character recognition processing, mask processing, and character concealment processing are performed on a document file, and subsequently the processed document file is transferred to another network server NSk.

In this example, it is assumed that the file processing device 10 provides a GUI to the edge device Ek in response to a request by the user. The file processing device 10 receives a document file and the instruction for file processing by a user operation on the GUI, and then executes various file processing on the document file according to the instruction.

The file processing device 10 provides the functions of the acceptance unit 11, the character recognition processing unit 12, the mask processing unit 13, the character concealment processing unit 14, the file generation processing unit 15, and the output unit 16, and thus executes the series of described processing.

In ACT11, the acceptance unit 11 accepts a request. That is, the acceptance unit 11 receives a document file to be processed and a request for file processing on the document file. The acceptance unit 11 saves the document file and the file processing request as appropriate.

In ACT12, the character recognition processing unit 12 executes character recognition processing on the document file. For example, the character recognition processing unit 12 recognizes text/characters in the document file using OCR (optical character recognition) technology. The character recognition processing unit 12 also generates a transparent character layer having the OCR recognized characters superimposed on the original document file such that the recognized characters overlap the original characters (text before the recognition).

The file generation processing unit 15 may save the post-recognition document file (document with the recognized characters is added) at this time.

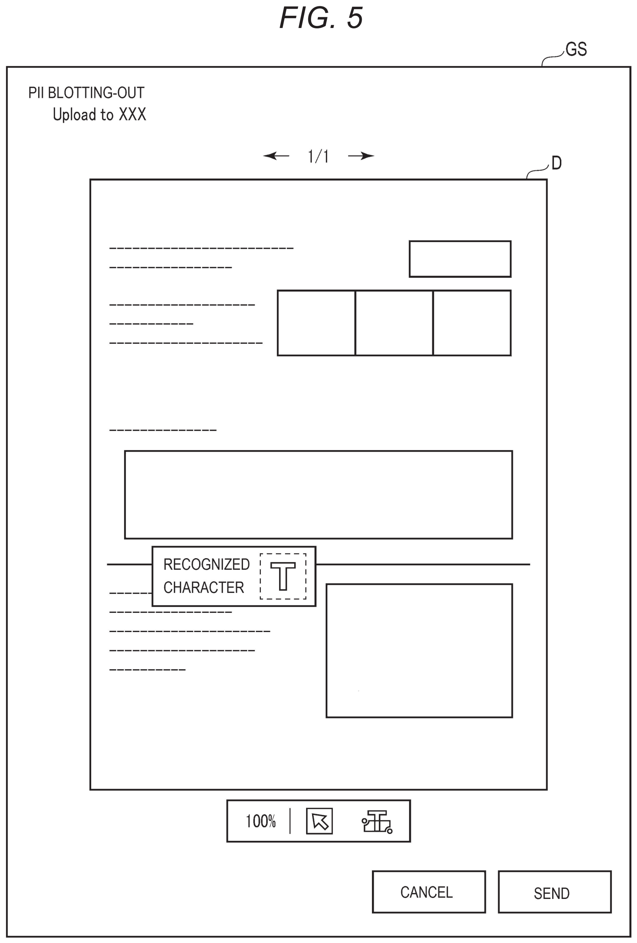

FIG. 5 shows an example of a GUI screen GS displayed on the edge device Ek. In this example, the GUI screen GS displays one page of a document file D. The GUI screen GS also displays a title "PII Blotting-Out" indicating that the file processing is related to blotting out PII (personally identifiable information), an indication "Upload to XXX" (indicating the ultimate transfer destination of the processed document file D), and a floating window indicating that the displayed version of the document file D has been character-recognition processed. The GUI screen GS also includes a designation button to designate a display magnification, a selection button permit an area designation or a character string-based designation as the method for designating a concealment area, a "Send" button, and a "Cancel" button. In this GUI screen GS, the area designation method is presently selected as the method for designating a concealment area.

The file processing device 10 receives the display magnification designation, the designation of the method for designating a concealment area, an instruction to transfer the document file, or the like, via the GUI screen GS.

In ACT13, the mask processing unit 13 executes the mask processing, which makes a concealment area set on the document file unreadable.

First, the mask processing unit 13 accepts the setting of a concealment area via the GUI screen GS. For example, the concealment area is set as a rectangular area by dragging the cursor on a displayed page of the document file D displayed on the GUI screen GS.

The mask processing unit 13 subsequently generates a mask that matches the concealment area in accordance with the setting of the rectangular area, and superimposes the mask on the document file such that the mask overlaps the designated concealment area. For example, the mask is a blacked-out rectangular shape. The GUI screen GS displays the mask as superimposed on the document file D. On the GUI screen GS, the setting of the concealment area and the display of the mask are shown in an integrated, seamless manner.

For example, the file generation processing unit 15 generates and saves the character-recognized document file and a masked document file.

In ACT14, the character concealment processing unit 14 executes the character concealment processing, which makes the underlying character information included in the concealment area illegible. For example, in response to a click on the "Send" button on the GUI screen GS, the character concealment processing unit 14 executes the character concealment processing prior to the transmission of the processed document file.

First, the character concealment processing unit 14 acquires information of each page, each character, and each concealment area in the document file. The character concealment processing unit 14 subsequently extracts the characters within each concealment area by intra-area character extraction processing, based on the information of each page, each character, and each concealment area. The character concealment processing unit 14 also replaces the character code of the extracted character with the character code of an obscuring character. Alternatively, the character concealment processing unit 14 deletes the character code of the extracted character.

The file generation processing unit 15 generates and saves the obscured document file.

In ACT15, the output unit 16 to output the obscured document file.

For example, the file processing device 10 transmits the obscured document file to the network server NSk designated by "XXX".

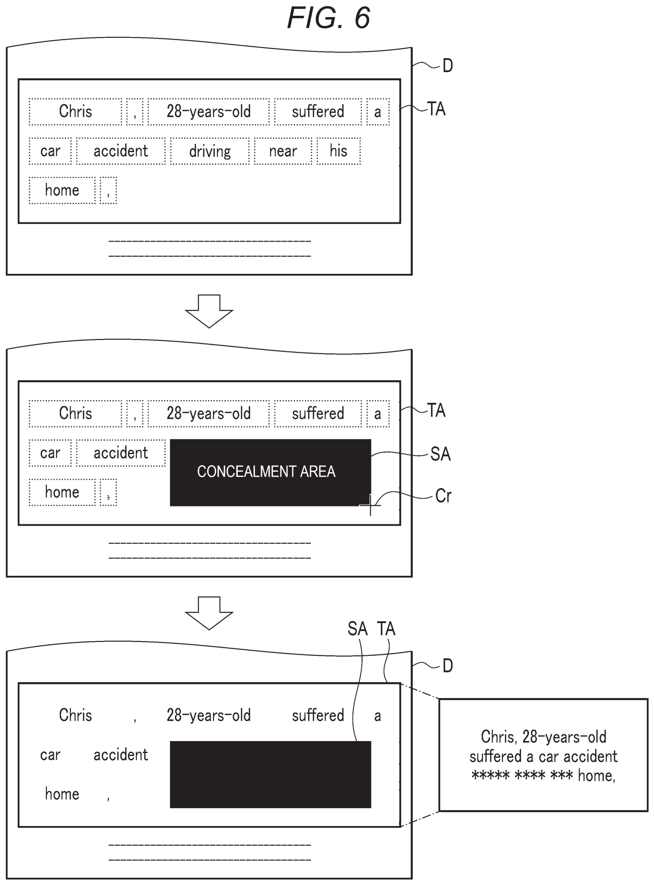

Additional explanation about the character recognition processing in ACT12, the mask processing in ACT13, and the character concealment processing in ACT14 will now be given with reference to FIG. 6. FIG. 6 schematically shows the series of operations including the character recognition processing, the mask processing, and the character concealment processing. FIG. 6 shows only a zoomed in part of the document file D displayed on the GUI screen.

As shown at the top of FIG. 6, after the character recognition processing in ACT12, character codes of the recognized text are provided in a character area TA of the document file D. For example, a character string of "Chris, 28-years-old suffered a car accident driving near his home," is provided, superimposed on the printed characters in the character area TA. In this example, the character code information is divided on a per word basis and handled on a per division basis. For example, the character information of the character codes can be selected on a per word basis by clicking the cursor.

As shown in the middle portion of FIG. 6, for the mask processing in ACT13, a concealment area is set by dragging a cursor Cr over a portion of the character area TA of the document file D. While an example of setting a concealment area based on the area designation by dragging the cursor Cr is described here, the concealment area may be set on a per word basis by clicking the cursor as described above. In this example, a concealment area is set over a character string of "driving near his" in the character area TA, and the character string is covered and hidden by a blacked-out rectangular mask. At this point, the character information of the character codes in the character area TA is still the character string of "Chris, 28-years-old suffered a car accident driving near his home,".

By the character concealment processing in ACT14, the character codes of the character string covered and hidden by the blacked-out rectangular mask, that is, the character string of "driving near his" to be concealed, are replaced with the character code of an obscuring character "*". Consequently, as shown in at the bottom of FIG. 6, the character information of the character codes in the character area TA is changed to a character string of "Chris, 28-years-old suffered a car accident ******* **** *** home,".

Thus, in the document file on which the character concealment processing in ACT14 has been done, the character information to be concealed cannot be acquired by copy and paste, or the like.

### Effects

As described above, the concealment processing on a document file is implemented by mask processing and character concealment processing. By the character concealment processing, the underlying character code information of the text to be concealed/masked is replaced with the character code of an obscuring character or is deleted. Therefore, in the document file on which the character concealment processing has been done, the concealed character information cannot be acquired. That is, leakage of the character information to be concealed is prevented.

### Others

A program according to the embodiment may be provided stored in an electronic device or otherwise. The program may be provided via a network or stored in a storage medium. The storage medium can be any computer-readable, non-transitory tangible medium. The storage medium may be any form or format that can store the program and be read by a computer, such as a CD-ROM or a memory card.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. An automated file processing method, comprising:
receiving an electronic document file and a request to process the electronic document file to redact sensitive information in the electronic document file;
performing text recognition processing on the electronic document file;
executing a masking process to visibly obscure a portion of the electronic document file corresponding to text recognized in the text recognition processing;
executing a text concealment process to delete or replace text in the visibly obscured portion of the electronic document file to prevent electronic recovery or reproduction of original text in the visibly obscured portion; and
generating a processed document file from the electronic document file on which the masking process and the text concealment process have been executed.

2. The automated file processing method according to claim 1, wherein the text recognition processing is optical character recognition (OCR) processing.

3. The automated file processing method according to claim 2, wherein the text outside the visibly obscured portion in the processed document file is recognized text provided by the OCR processing.

4. The automated file processing method according to claim 1, wherein the text outside the visibly obscured portion in the processed document file is recognized text provided by the text recognition processing.

5. The automated file processing method according to any one of claims 1 to 4, wherein the text concealment process replaces the text in the visibly obscured portion with a dummy character.

6. The automated file processing method according to any one of claims 1 to 5, wherein the text concealment process is deleting the text in the visibly obscured portion.

7. The automated file processing method according to any one of claims 1 to 6, wherein the portion is visibly obscured by placement of a black box over the portion.

8. An automated file processing device (10), comprising:
a communication interface (67) connected to a network; and
a processor (61) configured to:
receive, via the communication interface from an external electronic device, an electronic document file and a request to process the electronic document file to redact sensitive information in the electronic document file;
perform text recognition processing on the electronic document file;
execute a masking process to visibly obscure a portion of the electronic document file corresponding to text recognized in the text recognition processing;
execute a text concealment process to delete or replace text in the visibly obscured portion of the electronic document file to prevent electronic recovery or reproduction of original text in the visibly obscured portion; and
generate a processed document file from the electronic document file on which the masking process and the text concealment process have been executed.

9. The automated file processing device according to claim 8, wherein the text recognition processing is optical character recognition (OCR) processing, and preferably wherein the text outside the visibly obscured portion in the processed document file is recognized text provided by the OCR processing.

10. The automated file processing device according to claim 8, wherein the text outside the visibly obscured portion in the processed document file is recognized text provided by the text recognition processing.

11. The automated file processing device according to any one of claims 8 to 10, wherein the text concealment process replaces the text in the visibly obscured portion with a dummy character.

12. The automated file processing device according to any one of claims 8 to 11, wherein the text concealment process is deleting the text in the visibly obscured portion.

13. The automated file processing device according to any one of claims 8 to 12, wherein the portion is visibly obscured by placement of a black box over the portion.

14. The automated file processing device according to any one of claims 8 to 13, wherein the processor is further configured to:
output the processed document file to a cloud-storage service via the communication interface.

15. A non-transitory, computer-readable medium storing program instructions which when executed by a processor of an automated file processing device according to any one of claims 8 to 14 causes the device to perform a method according to any one of claims 1 to 7.
